# FASCICULE DE BREVET EUROPEEN

(11) **EP 3 802 227 B1**
(45) Date de publication et mention de la délivrance du brevet: **15.07.2026**
(21) Numéro de dépôt: 19790579.7
(22) Date de dépôt: 17.04.2019
(51) Int. Cl.: B60R 13/04, B62D 25/04, B60J 1/08, B60J 1/20, B60J 1/02

(54) **VÉHICULE AVEC ENJOLIVEUR LATÉRAL DE PARE-BRISE ET ENJOLIVEUR LATÉRAL DE PARE-BRISE**
FAHRZEUG MIT SEITLICHEM WINDSCHUTZSCHEIBENDEKORELEMENT UND SEITLICHES WINDSCHUTZSCHEIBENDEKORELEMENT
VEHICLE WITH LATERAL WINDSCREEN DECORATIVE ELEMENT AND LATERAL WINDSCREEN DECORATIVE ELEMENT

(30) Priorité: 24.05.2018 FR 1854393
(43) Date de publication de la demande: 14.04.2021
(73) Titulaire: Stellantis Auto SAS, 78300 Poissy (FR)
(72) Inventeur: JAOUEN, Jean Sébastien, 91160 LONGJUMEAU (FR); REMY, Stephane, 70400 BELVERNE (FR); AUBERT, Pascal, 78140 VELIZY VILLACOUBLAY (FR)
(74) Mandataire: BCIP
(86) Numéro de dépôt international: PCT/FR2019/050908
(87) Numéro de publication internationale: WO 2019/224442

(56) Documents cités:
- EP-A1- 2 489 578
- FR-A1- 2 920 737
- FR-A1- 2 955 292
- FR-A1- 3 055 124

## Description

L'invention concerne les enjoliveurs latéraux de pare-brise et les véhicules équipés de tels enjoliveurs.

Les enjoliveurs latéraux de pare-brise sont destinés à équiper une zone de liaison entre un pare-brise et un élément de carrosserie, notamment au niveau d'un montant de baie. Les enjoliveurs latéraux de pare-brise ont une fonction esthétique en tant que pièce de finition entre le pare-brise et les montants latéraux de baie du véhicule automobile, notamment par un masquage des charnières du capot. Ils ont également une fonction technique en empêchant l'encrassement de cette zone.

Un exemple d'un tel enjoliveur est donné par le document FR2932742. Ce document décrit un enjoliveur en deux parties, une partie formant un insert et une partie formant une peau extérieure de finition comprenant une patte latérale. Des moyens d'étanchéité sous la forme d'un film adhésif sont agencés entre les deux parties. L'enjoliveur est mis en place par fixation sur le montant latéral de baie.

L'enjoliveur peut être fixé de différentes manières, dans FR2950854, il est fixé sur une interface de liaison portée par une extension vers l'avant d'un montant latéral de baie.

Le document FR 2 920 737 divulgue un véhicule selon le préambule de la revendication 1.

L'un des problèmes rencontrés avec ce type d'enjoliveurs est leur caractère spécifique, qui demande une conception de la pièce pour chaque silhouette de véhicule. Il y a donc un besoin de plus d'universalité dans la conception de telles pièces et des parties avant des véhicules les recevant.

L'invention a pour objectif de proposer une solution générique pouvant être utilisée sur différentes silhouettes de véhicules. En particulier, l'invention propose un agencement pour la fixation d'un enjoliveur latéral de pare-brise pouvant être utilisé sur différents modèles de véhicules, le véhicule montrant cet agencement et l'enjoliveur latéral de pare-brise coopérant avec cet agencement.

Les objectifs précités sont atteints grâce aux caractéristiques de la revendication 1.

A cet effet et selon un premier aspect, l'invention a pour objet un véhicule comprenant au moins une aile latérale avant et au moins un enjoliveur latéral de pare-brise, le véhicule étant remarquable en ce qu'au moins un enjoliveur latéral de pare-brise comprend des moyens de fixation et des moyens d'indexation coopérant avec une interface de fixation et d'indexation présentée par ladite aile latérale avant.

Comme on l'aura compris à la lecture de la définition qui vient d'en être donnée, l'invention est remarquable en ce qu'elle propose l'emploi d'enjoliveurs latéraux de pare-brise génériques fixés au moins sur l'aile latérale avant et dont le positionnement correct est assuré par un système d'indexation. Il n'est donc plus nécessaire de concevoir un enjoliveur latéral de pare-brise différent pour chaque silhouette de véhicule.

Selon l'invention, le véhicule comprenant en outre un capot doté d'un bord arrière se superposant en partie avec la grille d'auvent, l'aile latérale avant présentant un bord supérieur disposé en prolongement du bord arrière du capot, le véhicule est remarquable en ce que l'interface de fixation et d'indexation de l'aile latérale comprend un rebord s'étendant depuis ledit bord supérieur de l'aile latérale avant en direction de la grille d'auvent. De préférence, l'interface de fixation et d'indexation comprend au moins une languette d'indexation s'étendant en prolongement dudit rebord.

Avantageusement, l'enjoliveur latéral de pare-brise comprenant un corps, les moyens de fixation à ladite aile latérale avant comprennent au moins un moyen de fixation rigide sous la forme d'un crochet comprenant un pied s'étendant depuis le corps dudit enjoliveur latéral de pare-brise et un doigt de verrouillage et définissant avec ledit corps un entrefer. Préférentiellement, les moyens d'indexation à ladite aile latérale avant comprennent au moins une nervure agencée et configurée pour coopérer avec la ou les languettes d'indexation de l'aile latérale avant. De préférence, la ou lesdites nervures présentent au moins une empreinte configurée pour recevoir la ou les languettes d'indexation.

Selon un mode de réalisation préféré de l'invention, le véhicule comprenant en outre une grille d'auvent s'étendant selon la direction transversale du véhicule et comprenant deux extrémités latérales, le véhicule est remarquable en ce qu'au moins un enjoliveur latéral de pare-brise comprend en outre des moyens de fixation à la grille d'auvent coopérant avec une interface de fixation présentée par ladite grille d'auvent.

Préférentiellement, les moyens de fixation à la grille d'auvent de l'enjoliveur latéral de pare-brise comprennent au moins un moyen d'emboîtage élastique, et l'interface de fixation de la grille d'auvent comprend au moins un ajour coopérant avec le ou les moyens d'emboîtage élastique de l'enjoliveur latéral de pare-brise.

Avantageusement, ladite interface de fixation de la grille d'auvent est formée par un bord relevé d'une des extrémités latérales de la grille d'auvent. De préférence, l'interface de fixation de la grille d'auvent est non plane.

Selon un mode de réalisation préféré de l'invention, le véhicule comprenant une caisse et une traverse inférieure de baie, le véhicule est remarquable en ce que l'enjoliveur latéral de pare-brise comprend en outre au moins une patte formant un contre-appui agencée pour se placer en appui contre la caisse du véhicule ou contre la traverse inférieure de baie.

Selon un deuxième aspect, l'invention concerne un enjoliveur latéral de pare-brise pour véhicule selon le premier aspect, ledit enjoliveur latéral de pare-brise comprenant un corps montrant une face de finition et une face technique, l'enjoliveur latéral de pare-brise étant remarquable en ce qu'il comprend des moyens de fixation à une aile latérale avant comprenant au moins un moyen de fixation rigide sous la forme d'un crochet comprenant un pied s'étendant depuis la face technique dudit enjoliveur latéral de pare-brise et un doigt de verrouillage définissant avec ledit corps un entrefer ; et en ce qu'il comprend en outre des moyens d'indexation comprenant au moins une nervure agencée et configurée pour coopérer avec au moins une languette d'indexation présentée par l'aile latérale avant.

Selon un mode de réalisation préféré, ledit enjoliveur latéral de pare-brise comprend en outre au moins un moyen d'emboîtage élastique pour sa fixation à une grille d'auvent.

De manière complémentaire ou alternative, il comprend au moins une patte formant un contre-appui s'étendant depuis la face technique dudit enjoliveur latéral de pare-brise selon une direction non-parallèle au pied du ou d'au moins un crochet.

Un exemple non couvert par l'invention concerne une aile latérale avant pour véhicule selon le premier aspect, l'aile latérale avant présentant un bord supérieur destiné à être disposé en prolongement d'un bord arrière d'un capot, l'aile latérale avant étant remarquable en ce qu'elle présente une interface de fixation et d'indexation d'un enjoliveur latéral de pare-brise se présentant sous la forme d'un rebord depuis ledit bord supérieur de l'aile latérale avant.

De préférence, ladite interface de fixation et d'indexation comprend en outre au moins une languette d'indexation s'étendant en prolongement dudit rebord.

Selon un quatrième aspect, l'invention concerne une grille d'auvent pour véhicule selon le premier aspect, la grille d'auvent étant destinée à s'étendre selon la direction transversale du véhicule et comprenant deux extrémités latérales, la grille d'auvent est remarquable en ce qu'elle comprend au moins une interface de fixation d'un enjoliveur latéral de pare-brise comprenant au moins un ajour pour la fixation dudit enjoliveur latéral de pare-brise.

De préférence, l'interface de fixation est non plane.

L'invention sera bien comprise et d'autres aspects et avantages apparaîtront clairement à la vue de la description qui suit donnée à titre d'exemple en référence aux planches de dessins annexées sur lesquelles :
- La figure 1 montre partiellement un véhicule selon l'invention comprenant un enjoliveur de pare-brise.
- La figure 2 illustre un enjoliveur latéral de pare-brise selon l'invention tel que vu depuis sa face de finition.
- La figure 3 illustre un enjoliveur latéral de pare-brise selon l'invention tel que vu depuis sa face technique.
- La figure 4 montre partiellement une partie avant de véhicule selon l'invention sans l'enjoliveur latéral de pare-brise.
- La figure 5 illustre la fixation et l'indexation de l'enjoliveur sur l'aile latérale avant.
- La figure 6 montre en détail la patte de contre appui de l'enjoliveur latéral de pare-brise selon l'invention.

Dans la description qui suit, le terme « comprendre » est synonyme de « inclure » et n'est pas limitatif en ce qu'il autorise la présence d'autres éléments dans le véhicule ou l'aile latérale, la grille d'auvent, ou l'enjoliveur latéral de pare-brise auquel il se rapporte. Il est entendu que le terme « comprendre » inclut les termes « consister en ». Les termes « inférieur », « supérieur », « avant », « arrière », « longitudinal » et « transversal » s'entendront par rapport à l'orientation générale du véhicule. « Inférieur » désignera une proximité au sol plus importante que « supérieur » selon l'axe vertical. Sur les différentes figures, les mêmes références désignent des éléments identiques ou similaires.

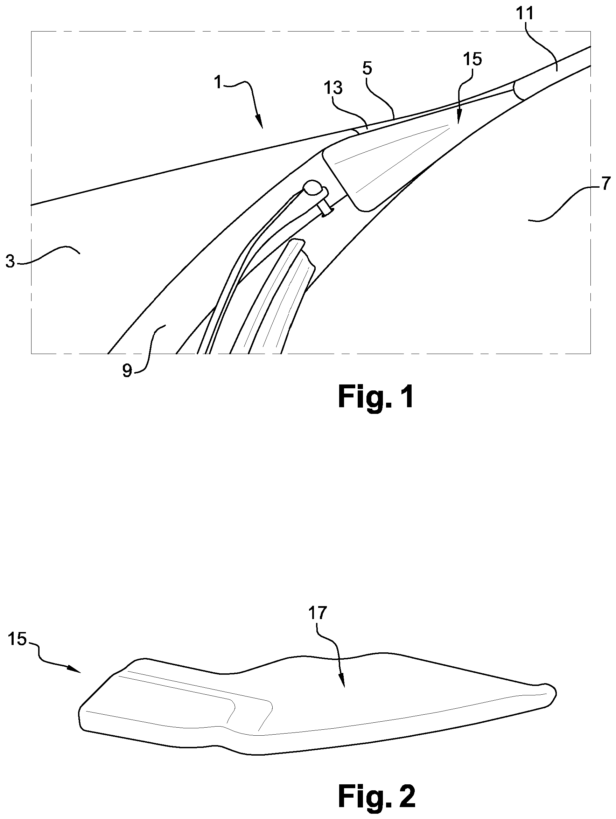

On se réfèrera en premier lieu à la figure 1 montrant partiellement un véhicule 1 selon l'invention. Le véhicule 1 comprend en partie avant un capot 3, une aile latérale avant 5 agencée de chaque côté dudit véhicule (une seule est en partie visible sur la figure 1), un pare-brise 7, une grille d'auvent 9, et des montants latéraux de baie 11 (un seul est en partie visible sur la figure 1). De manière connue, le capot 3 est doté d'un bord arrière se superposant en partie avec la grille d'auvent 9, et l'aile latérale avant 5 présente un bord supérieur 13 disposé en prolongement du bord arrière du capot 3. Le véhicule 1 selon l'invention comprend en outre au moins un enjoliveur 15 latéral de pare-brise, également nommé simplement « enjoliveur » ou « enjoliveur de pare-brise » ci-après pour la clarté de l'exposé.

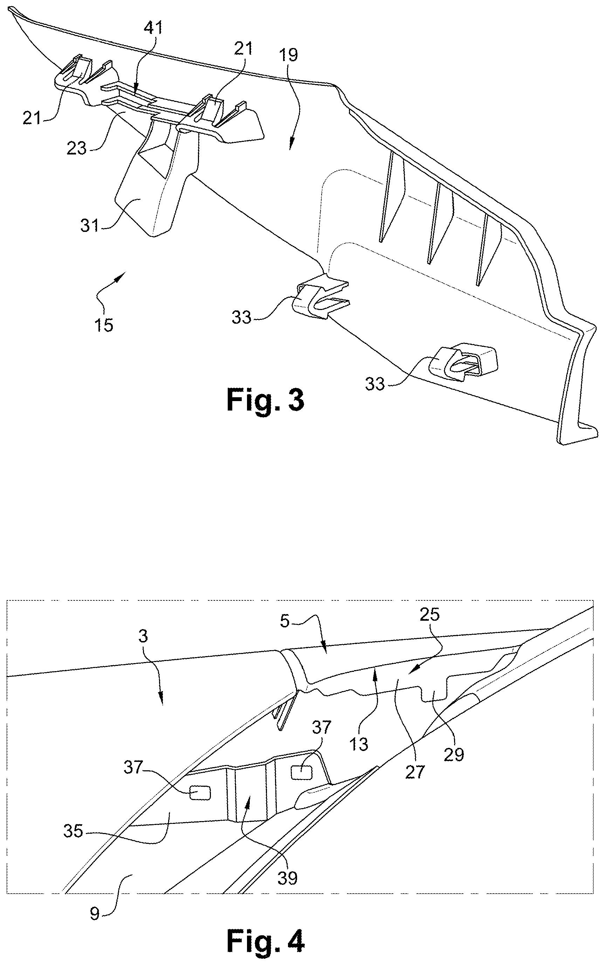

L'enjoliveur 15 latéral de pare-brise comprend un corps comprenant une face de finition 17 illustrée en figure 2, et une face technique 19 illustrée en figure 3. Selon une mise en œuvre préférée, l'enjoliveur 15 est moulé d'une seule pièce, si bien que ses différentes parties sont venues de matière. Avantageusement, il est réalisé en un matériau plastique, thermoplastique ou thermodurcissable. Par exemple, il est réalisé en polypropylène.

Selon l'invention, et comme illustré en figure 3, au moins un des enjoliveurs 15 latéraux de pare-brise du véhicule 1 et de préférence, tous les enjoliveurs 15 latéraux de pare-brise comprennent des moyens de fixation 21 et des moyens d'indexation 23 à l'aile latérale avant 5 du côté où ils sont situés. Comme illustré en figure 4, ladite ou lesdites ailes latérales avant 5 comprennent une interface 25 de fixation et d'indexation configurée pour coopérer avec les moyens de fixation et d'indexation de l'enjoliveur. Cette interface 25 de fixation et d'indexation comprend préférentiellement un rebord 27 s'étendant depuis ledit bord supérieur 13 de l'aile latérale avant 5 en direction de la grille d'auvent 9. Selon un mode de réalisation préféré, l'interface 25 de fixation et d'indexation comprend au moins une languette d'indexation 29 s'étendant en prolongement dudit rebord 27.

En revenant à la figure 3, on peut voir que l'enjoliveur 15 présente des moyens de fixation 21 et des moyens d'indexation 23 à ladite aile latérale avant 5 configurés pour coopérer avec l'interface de fixation de l'aile latérale avant 5. De manière avantageuse, les moyens de fixation 21 à ladite aile latérale avant 5 comprennent au moins un moyen de fixation 21 rigide sous la forme d'un crochet comprenant un pied s'étendant depuis le corps dudit enjoliveur 15 et un doigt de verrouillage et définissant avec ledit corps un entrefer. L'écartement présenté par cet entrefer, à savoir l'écartement présenté par le doigt de verrouillage et le corps de l'enjoliveur, est choisi par l'homme du métier comme étant supérieur ou égal à l'épaisseur présentée par le rebord 27 de l'aile latérale avant 5 sur lequel l'enjoliveur 15 est destiné à s'accrocher. Le ou les crochets 21 sont avantageusement ouverts vers le haut lorsque l'enjoliveur est en place. La présence de moyens de fixation rigides sous la forme de crochets 21 va permettre de fixer ledit enjoliveur 15 selon la direction transversale du véhicule (c-à-d selon l'axe Y).

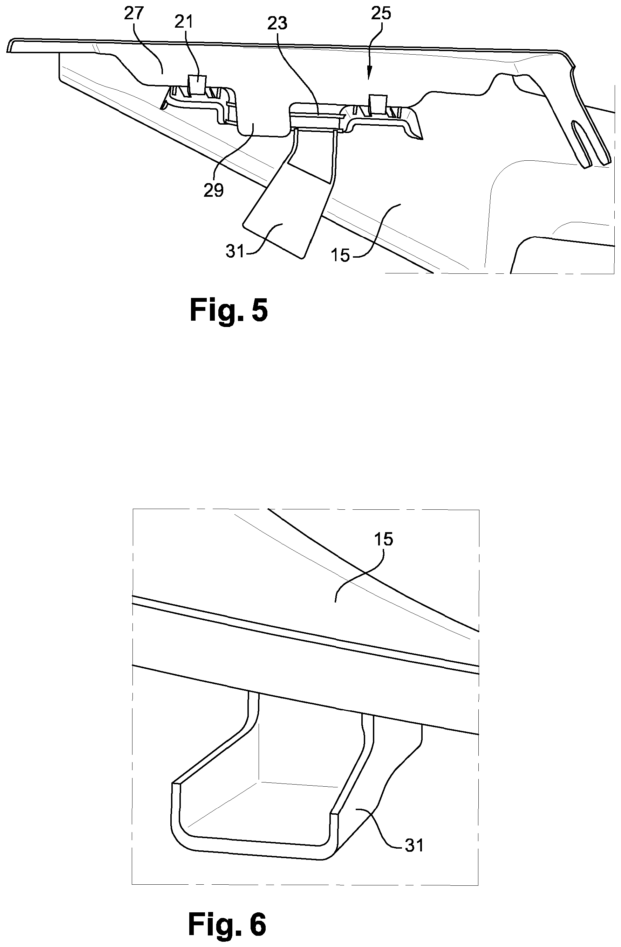

Par ailleurs, les moyens d'indexation 23 à ladite aile latérale avant 5 comprennent au moins une nervure agencée et configurée pour coopérer avec la ou les languettes d'indexation 29 de l'aile latérale avant 5. Par exemple, la ou les nervures 23 encadrent la languette d'indexation, ou comme illustré sur la figure 3, présentent une empreinte 41, de largeur correspondant à celle de la languette d'indexation, dans laquelle cette dernière vient se positionner. Le positionnement de la languette d'indexation 29 dans l'empreinte est illustré en figure 5. Par ce moyen, l'enjoliveur 15 est indexé selon la direction longitudinale du véhicule (c-à-d selon l'axe X). L'homme du métier pourra envisager d'autres moyens d'indexation, par exemple la présence d'un pion d'indexation s'étendant depuis la face technique de l'enjoliveur et destiné à coopérer avec un trou débouchant sur le bord inférieur du rebord. Eventuellement, l'interface de fixation et d'indexation de l'aile présente au moins deux languettes de fixation.

Selon une mise en œuvre préférée de l'invention, l'enjoliveur 15 présente deux moyens de fixation 21 rigides disposés de part et d'autre des moyens d'indexation 23 à l'aile latérale avant. De préférence encore, l'enjoliveur 15 présente deux moyens de fixation 21 rigides destinés à être placés à des hauteurs différentes, et le rebord 27 montre une hauteur différente de part et d'autre de la languette d'indexation 29.

En vue d'obtenir une fixation isostatique de l'enjoliveur 15, ce dernier va idéalement comprendre en outre au moins une patte 31 formant un contre-appui et agencée pour se placer en appui contre la caisse du véhicule 1 ou contre la traverse inférieure de baie. L'association de cette patte de contre-appui et des crochets 21 rigides va permettre de fixer la position de l'enjoliveur 15 selon la direction verticale (c-à-d selon l'axe Z). C'est pourquoi, comme illustré en figure 5, ladite patte 31 de contre-appui s'étend globalement vers le bas. Comme illustré en figure 6, elle montre avantageusement une zone d'appui selon un plan, et se présente par exemple sous une forme générale en U.

Selon une mise en œuvre préférée de l'invention, l'enjoliveur 15 comprend en outre des moyens 33 de fixation à la grille d'auvent 9 coopérant avec une interface de fixation 35 présentée par ladite grille d'auvent 9.

Comme illustré en figure 4, ladite interface de fixation 35 de la grille d'auvent 9 est formée par un bord relevé d'une des extrémités latérales de la grille d'auvent 9.

Avantageusement, les moyens 33 de fixation de l'enjoliveur à la grille d'auvent 9 comprennent un ou plusieurs moyens 33 d'emboîtage élastique, tels que des clips de fixation. L'interface de fixation 35 de la grille d'auvent 9 comprend alors au moins un ajour 37 coopérant avec le ou les moyens 33 d'emboîtage élastique de l'enjoliveur 15. Idéalement, l'interface de fixation 35 de la grille d'auvent 9 est non plane et présente une surface d'appui 39 sur laquelle vient se plaquer l'enjoliveur. Cette configuration permet d'éviter ou au moins de limiter la génération de bruits de vibration lors du roulage du véhicule, et contribue à l'isostatisme de la pièce selon la direction transversale du véhicule.

On notera que le ou les crochets 21 présentent une fonction de reprise d'effort, c'est pourquoi ils sont rigides. En effet, le doigt de verrouillage va se plaquer contre le rebord 27 de l'aile latérale avant 5 et va donc maintenir en position l'enjoliveur contre ladite aile latérale avant 5. Ce maintien par un élément de fixation rigide limite voire empêche le risque de déclippage des moyens 33 de fixation élastique à la grille d'auvent 9.

Le montage de l'enjoliveur 15 de pare-brise sur le véhicule 1 s'effectue comme suit : le rebord 27 de l'interface de fixation 25 de l'aile latérale avant 5 est inséré dans l'entrefer de ou des crochets 21 de l'enjoliveur. Cette opération est rendue possible par la mise en position de la languette d'indexation 29 dans l'empreinte 41 des nervures 23 formant le moyen d'indexation de l'enjoliveur 15. Le corps de l'enjoliveur pivote de sorte à ce que les moyens de clippage 33 soient positionnés en regard des ajours 37 de l'interface de fixation 35 de la grille d'auvent 9, puis ils y sont enfoncés, fixant l'enjoliveur 15 en position.

## Revendications

1. Véhicule (1) comprenant au moins une aile latérale avant (5) et au moins un enjoliveur (15) latéral de pare-brise, au moins un enjoliveur (15) latéral de pare-brise comprend des moyens de fixation (21) et des moyens d'indexation (23) coopérant avec une interface (25) de fixation et d'indexation présentée par ladite aile latérale avant (5), le véhicule (1) comprenant en outre un capot (3) doté d'un bord arrière se superposant en partie avec la grille d'auvent (9), l'aile latérale avant (5) présentant un bord supérieur (13) disposé en prolongement du bord arrière du capot (3), le véhicule (1) étant **caractérisé en ce que** l'interface (25) de fixation et d'indexation de l'aile latérale avant (5) comprend un rebord (27) s'étendant depuis ledit bord supérieur (13) de l'aile latérale avant (5) en direction de la grille d'auvent (9); de préférence, l'interface (25) de fixation et d'indexation comprend au moins une languette d'indexation (29) s'étendant en prolongement dudit rebord (27).

2. Véhicule (1) selon la revendication 1, l'enjoliveur (15) latéral de pare-brise comprenant un corps, **caractérisé en ce que** les moyens de fixation (21) à ladite aile latérale avant (5) comprennent au moins un moyen de fixation (21) rigide sous la forme d'un crochet comprenant un pied s'étendant depuis le corps dudit enjoliveur (15) latéral de pare-brise et un doigt de verrouillage et définissant avec ledit corps un entrefer.

3. Véhicule (1) selon la revendication 2, **caractérisé en ce que** les moyens d'indexation (23) à ladite aile latérale avant (5) comprennent au moins une nervure agencée et configurée pour coopérer avec la ou les languettes d'indexation (29) de l'aile latérale avant (5), de préférence la ou lesdites nervures (23) présentent au moins une empreinte (41) configurée pour recevoir la ou les languettes d'indexation (29).

4. Véhicule (1) selon l'une des revendications 1 à 3, le véhicule (1) comprenant en outre une grille d'auvent (9) s'étendant selon la direction transversale du véhicule (1) et comprenant deux extrémités latérales, le véhicule étant **caractérisé en ce qu'**au moins un enjoliveur (15) latéral de pare-brise comprend en outre des moyens de fixation (33) à la grille d'auvent (9) coopérant avec une interface de fixation (35) présentée par ladite grille d'auvent (9).

5. Véhicule (1) selon la revendication 4, **caractérisé en ce que** les moyens (33) de fixation à la grille d'auvent (9) de l'enjoliveur (15) latéral de pare-brise comprennent au moins un moyen d'emboîtage élastique, et **en ce que** l'interface de fixation (35) de la grille d'auvent (9) comprend au moins un ajour (37) coopérant avec le ou les moyens d'emboîtage élastique de l'enjoliveur (15) latéral de pare-brise; de préférence, ladite interface de fixation de la grille d'auvent est formée par un bord relevé d'une des extrémités latérales de la grille d'auvent ; de préférence encore l'interface de fixation de la grille d'auvent est non plane.

6. Véhicule (1) selon l'une des revendications 1 à 5, le véhicule (1) comprenant une caisse et une traverse inférieure de baie, **caractérisé en ce que** l'enjoliveur (15) latéral de pare-brise comprend en outre au moins une patte (31) formant un contre-appui agencée pour se placer en appui contre la caisse du véhicule (1) ou contre la traverse inférieure de baie.

## Patentansprüche

1. Fahrzeug (1) mit mindestens einem vorderen Seitenflügel (5) und mindestens einer seitlichen Windschutzscheibenabdeckung (15), wobei mindestens eine seitliche Windschutzscheibenabdeckung (15) Befestigungsmittel (21) und Indexierungsmittel (23) umfasst, die mit einer von dem vorderen Seitenflügel (5) bereitgestellten Befestigungs- und Indexierungsschnittstelle (25) zusammenwirken, wobei das Fahrzeug (1) ferner eine Motorhaube (3) mit einer hinteren Kante umfasst, die sich teilweise mit dem Windschutzgitter (9) überlagert, Der vordere Seitenschenkel (5) hat einen oberen Rand (13), der in Verlängerung des hinteren Randes der Motorhaube (3) angeordnet ist, wobei das Fahrzeug (1) **dadurch gekennzeichnet ist, dass** die Schnittstelle (25) zum Befestigen und Indexieren des vorderen Seitenschenkels (5) einen Flansch (27) umfasst, der sich von dem oberen Rand (13) des vorderen Seitenschenkels (5) in Richtung des Windschutzgitters (9) erstreckt; vorzugsweise umfasst die Schnittstelle (25) zum Befestigen und Indexieren mindestens eine sich in S erstreckende Indexierzunge (29) Verlängerung des Flansches (27).

2. Fahrzeug (1) nach Anspruch 1, wobei die seitliche Windschutzscheibenkappe (15) einen Körper umfasst, **dadurch gekennzeichnet, dass** die Befestigungsmittel (21) an dem vorderen seitlichen Flügel (5) wenigstens ein starres Befestigungsmittel (21) in Form eines Hakens umfassen, das einen Fuß, der sich von dem Körper der seitlichen Windschutzscheibenkappe (15) erstreckt, und einen Verriegelungsfinger umfasst und mit dem Körper einen Luftspalt definiert.

3. Fahrzeug (1) nach Anspruch 2, **dadurch gekennzeichnet, dass** die Indexierungsmittel (23) an dem vorderen Seitenflügel (5) mindestens eine Rippe umfassen, die so angeordnet und konfiguriert ist, dass sie mit der oder den Indexierungszungen (29) des vorderen Seitenflügels (5) zusammenwirkt, wobei vorzugsweise die Rippe oder die Rippen (23) mindestens eine Vertiefung (41) aufweisen, die so konfiguriert ist, dass sie die oder die Indexierungszungen (29) aufnehmen.

4. Fahrzeug (1) nach einem der Ansprüche 1 bis 3, wobei das Fahrzeug (1) ferner ein in Querrichtung des Fahrzeugs (1) verlaufendes Vordach (9) mit zwei seitlichen Enden aufweist, wobei das Fahrzeug **dadurch gekennzeichnet ist, dass** mindestens eine seitliche Windschutzscheiben-Zierkappe (15) ferner Befestigungsmittel (33) an dem Vordach (9) aufweist, die mit einer Befestigungsschnittstelle (35) zusammenwirken, die von dem Vordach (9) bereitgestellt wird.

5. Fahrzeug (1) nach Anspruch 4, **dadurch gekennzeichnet, dass** die Mittel (33) zur Befestigung der seitlichen Windschutzscheibenabdeckung (15) am Windschutzscheibengitter (9) mindestens ein elastisches Einsteckmittel umfassen, und dass die Befestigungsschnittstelle (35) des Windschutzscheibengitters (9) mindestens einen Durchbruch (37) umfasst, der mit dem oder den elastischen Einsteckmitteln der seitlichen Windschutzscheibenabdeckung (15) zusammenwirkt; vorzugsweise die Befestigungsschnittstelle des Windschutzscheibengitters Ein Vorzeltgitter besteht aus einer erhöhten Kante eines Seitenendes des Vorzeltgitters; vorzugsweise ist die Befestigungsschnittstelle des Vorzeltgitters nicht eben.

6. Fahrzeug (1) nach einem der Ansprüche 1 bis 5, wobei das Fahrzeug (1) einen Wagenkasten und eine untere Wagenstange umfasst, **dadurch gekennzeichnet, dass** die seitliche Zierkappe (15) der Windschutzscheibe ferner mindestens eine Lasche (31) umfasst, die ein Widerlager bildet, das so angeordnet ist, dass es sich gegen den Wagenkasten des Fahrzeugs (1) oder gegen die untere Wagenstange abstützt.

## Claims

1. Vehicle (1) comprising at least one front lateral wing (5) and at least one windscreen lateral trim (15), at least one windscreen lateral trim (15) comprises fixing means (21) and indexing means (23) cooperating with a fixing and indexing interface (25) presented by said front lateral wing (5), the vehicle (1) further comprising a hood (3) provided with a rear edge partially superposed with the canopy grid (9), the front lateral wing (5) having an upper edge (13) arranged in extension of the rear edge of the hood (3), the vehicle (1) being **characterised in that** the fixing and indexing interface (25) of the front lateral wing (57) comprises a flange extending from said upper edge (13) of the front lateral wing (5) at the management of the canopy grid (9); preferably, the fixing and indexing interface (25) comprises at least one indexing tongue (29) extending in extension of said rim (27).

2. Vehicle (1) according to claim 1, the lateral windscreen trim (15) comprising a body, **characterised in that** the means (21) for fixing to said front lateral wing (5) comprise at least one rigid fixing means (21) in the form of a hook comprising a foot extending from the body of said lateral windscreen trim (15) and a locking finger and defining with said body an air gap.

3. Vehicle (1) according to claim 2, **characterised in that** the indexing means (23) for indexing said front lateral wing (5) comprise at least one rib arranged and configured to cooperate with the indexing tongue or tongues (29) of the front lateral wing (5), preferably said rib or ribs (23) have at least one impression (41) configured to receive the indexing tongue or tongues (29).

4. Vehicle (1) according to one of Claims 1 to 3, the vehicle (1) further comprising a canopy grille (9) extending along the transverse management of the vehicle (1) and comprising two lateral ends, the vehicle being **characterised in that** at least one windscreen lateral trim (15) further comprises means (33) for fixing to the canopy grille (9) cooperating with a fixing interface (35) presented by said canopy grille (9).

5. Vehicle (1) according to claim 4, **characterised in that** the means (33) for fastening to the canopy grid (9) of the lateral windscreen trim (15) comprise at least one elastic fitting means, and **in that** the fastening interface (35) of the canopy grid (9) comprises at least one aperture (37) cooperating with the elastic fitting means of the lateral windscreen trim (15); preferably, said fastening interface of the canopy grid is formed by a raised edge of one of the lateral ends of the canopy grid; more preferably, the fastening interface of the canopy grid is not planar.

6. Vehicle (1) according to one of Claims 1 to 5, the vehicle (1) comprising a body and a lower bay crossmember, **characterised in that** the lateral windscreen trim (15) further comprises at least one tab (31) forming a counter-support arranged to bear against the body of the vehicle (1) or against the lower bay crossmember.
